# EUROPÄISCHE PATENTSCHRIFT

(11) **EP 3 592 167 B1**
(45) Veröffentlichungstag und Bekanntmachung des Hinweises auf die Patenterteilung: **08.09.2021**
(21) Anmeldenummer: 18716482.7
(22) Anmeldetag: 05.03.2018
(51) Int. Cl.: A43B 13/04, A43B 23/08, A43B 23/17, A43B 13/02, C09J 167/02

(54) **KUNSTSTOFFZUSAMMENSETZUNG ZUR HERSTELLUNG VON VERSTEIFUNGSMATERIALIEN**
PLASTIC COMPOSITION FOR PRODUCING REINFORCEMENT MATERIALS
COMPOSITION PLASTIQUE POUR LA PRODUCTION DE MATÉRIAUX DE RENFORCEMENT

(30) Priorität: 06.03.2017 DE 102017002070
(43) Veröffentlichungstag der Anmeldung: 15.01.2020
(73) Patentinhaber: Rhenoflex GmbH, 67065 Ludwigshafen (DE)
(72) Erfinder: JÄRGER, Henritte, 67259 Heuchelheim (DE); HECKMANN, Jürgen, 67378 Zeiskam (DE)
(74) Vertreter: Jendricke, Susann
(86) Internationale Anmeldenummer: PCT/DE2018/000052
(87) Internationale Veröffentlichungsnummer: WO 2018/161983

(56) Entgegenhaltungen:
- EP-A1- 0 651 015
- DE-A1- 3 633 777
- DE-A1- 10 316 617
- US-A- 5 258 445

## Beschreibung

Die vorliegende Erfindung betrifft eine Kunststoffzusammensetzung zur Herstellung von Versteifungsmaterialien, insbesondere im Schuh,- Orthopädie,- Basteloder Täschnerbereich, mit einem Heißschmelzklebermittel und einem die Biegesteifigkeit erhöhenden Mittel. Des Weiteren betrifft die Erfindung eine Verwendung und Versteifungsmaterialien, die die Kunststoffmischung enthalten.

Mittel, die in Kunststoffzusammensetzungen die Biegesteifigkeit erhöhen, weisen gegenüber dem Heißschmelzklebermittel eine höhere Härte auf und verleihen dem erhaltenen Produkt eine höhere Biegesteifigkeit, die allein durch das Heißschmelzklebermittel nicht erreichbar wäre. Die Anforderungen an die Biegesteifigkeit sind je nach Verwendungszweck unterschiedlich. Es kommt jedenfalls darauf an, dass die mit der Kunststoffmischung hergestellten Versteifungsmaterialien keine oder nur eine bestimmte Durchbiegung zulassen, ggf. eine Elastizität aufweisen und bei Verformung oder Spannungszuständen nicht brechen.

Aus dem druckschriftlichen Stand der Technik sind im einschlägigen Bereich verschiedene Zusammensetzungen bekannt, die Heißschmelzklebermittel und Mittel zu Erhöhung der Biegesteifigkeit enthalten. Als die Biegesteifigkeit des Versteifungsmaterials erhöhenden Mittel wurden bisher Füllstoffe eingesetzt, die sich in der Kunststoffmischung nicht lösen.

Die Druckschrift DE 26 21 195 C offenbart Füllstoffe aus Holzmehl und Kreide, die von den Heißschmelzklebemitteln vollständig überzogen werden und die Eigenschaft des Kunststoffes annehmen.

Die Druckschrift DE 103 16 617 A1 beschreibt ebenfalls den Einsatz von Holzmehl und Kreide einer bestimmten Partikelform und -größe.

Aus der Druckschrift DE 10 2009 020 036 A1 sind ebenfalls die Grundkomponenten des Heißschmelzkleber einerseits, Füllstoff andererseits bekannt, wobei es dort um Pflanzenenfasern einer bestimmten Faserlänge, insbesondere um Reisstroh, geht.

Die Druckschrift WO 2014/005684 A1 befasst sich mit einer Füllstoffmischung aus Reisschalenpulver und Milchsäurepulver. Diese Füllstoffmischung kann bis zu 75 Gew.-% in einer Kunststoffmischung ausmachen, die als weitere Komponenten wenigstens 25 Gew.-% Heißschmelzkleber enthält und der Herstellung von Versteifungsmaterialien dient.

Aus der Druckschrift DE 69129475 T2 sind geformte thermoplastische Gegenstände bekannt, die eine mischbare thermoplastische Polyurethan-Polymer-Komponente mit einer ersten Viskosität beim Scheren einerseits und eine nicht mischbare thermoplastische Polymer-Komponente mit einer zweiten Viskosität beim Scheren andererseits enthalten. Als nicht mischbare Polymer-Komponente kommt Polycarbonat zum Einsatz, welches zur Erhöhung der Biegesteifigkeit beiträgt.

Im Hinblick auf die Verarbeitung der Kunststoffmischung werden an die Ausgangsstoffe verschiedene Anforderungen gestellt. Gerade bei dem üblichen Einsatz nicht schmelzbarer Füllstoffe muss spezifiziert werden, welches Verarbeitungsverfahren zum Einsatz kommt. Zur Auswahl stehen dabei verschiedene Verfahren, wie Sinterverfahren, Druckverfahren, Extrusionsverfahren, Kalanderverfahren. Durch die Spezifizierung der Beschaffenheit der Kunststoffmischung in Abhängigkeit von dem Verarbeitungsverfahren müssen verschiedene Komponenten hergestellt und vorgehalten werden, was die Herstellungs- und Lagerhaltungskosten erhöht. Zudem müssen für die verschiedenen Ausgangsstoffe Prüfvorgange realisiert und die Lagerkonditionen überwacht werden.

Für sich gesehen ist aus der Getränkeflaschenindustrie der Einsatz von Polyethylenterephthalatharz (PET-Harz) bekannt. PET ist außergewöhnlich fest, sehr leicht und praktisch unzerbrechlich. Diese Vorteile haben PET zu einer attraktiven Alternative zu Glas und anderen traditionellen Verpackungsmaterialien gemacht.

Auf dem Gebiet der Herstellung von Getränkeflaschen bis zu 20 I und mehr Aufnahmevolumen unter Einsatz von PET-Harz sind - für sich gesehen - verschiedene Entwicklungen bekannt:
In der Druckschrift WO 2014/183791 A1 ist eine PET-Flasche mit verbesserter Beständigkeit gegen Spannungsrisse beschrieben, die durch die Umwelt verursacht sind. Spannungsrisse entstehen in amorphen oder niedrig-kristallinen Bereichen der PET-Flasche, die gemäß der in Rede stehenden Druckschrift mit organischen Lösungsmitteln, bspw. Aceton oder wässrigen Lösungen davon, behandelt werden.

Die Druckschrift DE 603 04 568 T2 zeigt PET-Harz-Produkte, die eine Verbindung enthalten, die den Acetaldehydgehalt reduziert. Azetaldehyd ist ein unerwünschtes Abbauprodukt, das bei der Schmelzbearbeitung des PET entsteht.

Aus der Praxis ist ein weiteres PET-Harz bekannt, welches unter der Bezeichnung "BISNEINEX" (Fa. Equipolymers GmbH, Schkopau) im Handel erhältlich ist. Der Begriff "BISNEINEX" ist markenrechtlich geschützt und wird nachfolgend unter Hinzufügung der Angabe des hochgestellten "TM" verwendet. BISNEINEX ™ ist für großvolumige Behälter einsetzbar und weist verbesserte Eigenschaften im Hinblick auf die Biegesteifigkeit, Temperaturbeständigkeit, Lastverhalten und Verarbeitbarkeit auf.

Der Erfindung liegt die Aufgabe zugrunde, eine Kunststoffzusammensetzung der in Rede stehenden Art anzugeben, wobei das die Biegesteifigkeit erhöhende Mittel kostengünstig ist und die Kunststoffzusammensetzung grundsätzlich für verschiedene Verarbeitungsverfahren einsetzbar ist, wobei die Biegesteifigkeit, die Härte und das Wärmeverhalten erhalten bleiben. Außerdem sollen die positiven Eigenschaften der Kunststoffzusammensetzung auch in den daraus erhaltenen Versteifungsmaterialien und den unter Verwendung dieser Versteifungsmaterialien erhaltenen Produkten beinhaltet sein.

Die voranstehende Aufgabe wird bezüglich der Kunststoffzusammensetzung und der Versteifungsmaterialien durch die Merkmale der Patentansprüche 1, 10 und 11 gelöst. Danach ist das Heißschmelzklebermittel ausgewählt aus der Gruppe, umfassend thermoplastische Polyurethane (TPU), Ethylenvinylacetat (EVA) und thermoplastischen Kleber, sowie Mischungen davon, und das die Biegesteifigkeit erhöhende Mittel ist ein Polyethylenterephthalatharz (PET-Harz), insbesondere ein solches, was im Handel als "BISNEINEX" / BISNEINEX ™ erhältlich ist.

Ausgehend von dem Stand der Technik, bei dem als die Biegesteifigkeit erhöhendes Mittel nicht lösbare Füllstoffe, wie Pflanzenfasern, Polycarbonat, Reisstroh oder Füllstoffmischungen aus Reisschalenpulver und Milchsäurepulver eingesetzt werden, wurde erkannt, dass derartige Kunststoffzusammensetzungen immer spezifisch auf das Verarbeitungsverfahren zur Herstellung der Versteifungsmaterialien zugeschnitten sein müssen. Beispielsweise wird Polycarbonat ausschließlich für Produkte eingesetzt, die im Wege des Sinterverfahrens hergestellt werden, während organische Füllstoffe ausschließlich im Extrusionsverfahren verarbeitet werden. Das bringt hohe Herstellungs- und Lagerhaltungskosten mit sich.

Erfindungsgemäß wurde erkannt, dass die Kunststoffzusammensetzung dann universell auf verschiedene Verarbeitungsmethoden anwendbar ist, wenn dem die Biegesteifigkeit erhöhenden Mittel die Eigenschaft innewohnt, im Heißschmelzklebermittel hinreichend lösbar zu sein. Wenn sich das die Biegesteifigkeit erhöhende Mittel gut mit dem Heißschmelzklebermittel vermischt und mit zunehmender Temperatur klebrig und gut verarbeitbar wird und dann im Produkt auch noch die gewünschten Eigenschaften erzeugt, ist es für verschiedene Verarbeitungsmethoden einsetzbar. Weiter ist erfindungsgemäß erkannt worden, dass das für sich gesehen in der Getränkeflaschenproduktion eingesetzte Polyethylenterephthalatharz (PET-Harz), insbesondere das spezielle, im Handel als BISNEINEX ™ erhältliche PET-Harz geeignet ist, Versteifungsmaterialien mit gewünschten Eigenschaften herzustellen. Durch die außergewöhnliche Festigkeit, das geringe Gewicht und die Unzerbrechlichkeit sowie die hohe Biegesteifigkeit des PET-Harzes, insbesondere von BISNEINEX™, wurde überraschend gefunden, dass das PET-Harz, insbesondere BISNEINEX™, gemeinsam mit dem Heißschmelzklebermittel verschiedenen Verarbeitungsverfahren zugeführt werden kann. Hierdurch steht ein konstantes, einheitliches, die Biegesteifigkeit erhöhendes Mittel neben dem Heißschmelzklebermittel zur Verfügung und nur noch wenige Rohstoffe müssen vorgehalten werden, was mit einer erheblichen Einsparung an Lager und Unterhaltungskosten einhergeht.

Ein weiterer Vorteil der erfindungsgemäßen Kunststoffzusammensetzung, enthaltend ein PET-Harz, insbesondere BISNEINEX ™, als die Biegesteifigkeit erhöhendes Mittel besteht darin, dass es im Handel gerade im Vergleich zu dem teureren Polycarbonat kostengünstig zu erhalten ist und zwar bereits in einer Darreichungsform, die mit dem Heißschmelzklebermittel harmoniert. Die Vorbereitungshandlungen zur Herstellung der erfindungsgemäßen Kunststoffzusammensetzung werden minimiert. Die Einhaltung von Partikelformen oder -abmessungen bei Füllstoffen spielt keine Rolle mehr.

Das Polyethylenterephthalatharz (PET-Harz) versteht sich als solches, das eine Schmelztemperatur aufweist, die deutlich über der des Heißschmelzklebermittels liegt und insbesondere ca. 260 °C beträgt. Durch die erhebliche Differenz der Schmelztemperaturen ist die Eignung des Polyethylenterephthalatharz (PET-Harz) BISNEINEX™ als die Biegesteifigkeit erhöhendes Mittel, bzw. als Füllstoff oder Zuschlagstoff grundsätzlich gegeben. Es kommt darauf an, dass die Lösbarkeit gegeben ist, nicht aber unbedingt darauf, dass das PET-Harz in der erfindungsgemäßen Kunststoffzusammensetzung vollständig gelöst wird.

Weiter versteht sich das Polyethylenterephthalatharz (PET-Harz) als solches, das eine hohe intrinsische Viskosität von 1,04 ± 0,03 dl/g aufweist. Für die hohe intrinsische Viskosität ist eine extrem lange Molekülkettenbildung des erfindungsgemäß als die Biegesteifigkeit erhöhendes Mittel eingesetzten PET-Harzes verantwortlich. Das besonders bevorzugte PET-Harz BISNEINEX ™ weist genau diese intrinsische Viskosität von 1,04 ± 0,03 dl/g auf.

Das besonders bevorzugte PET-Harz BISNEINEX ™ zeichnet sich weiter dadurch aus, dass es Bisphenol-A-frei ist. Bisphenol-A ist als problematisch im Hinblick auf die Gesundheit erkannt. Es erzeugt Fruchtbarkeitsprobleme bei Frauen und Männern und fördert die Tumorbildung. Im Lebensmittelbereich ist es bspw. in Deutschland verboten, Baby-Flaschen aus einem Kunststoff herzustellen, der Bisphenol-A enthält. Obgleich die hier relevanten Produkte Versteifungsmaterialien sind, die nicht in den Lebensmittelbereich fallen, werden durch die Verwendung von BISNEINEX ™ die erfindungsgemäße Kunststoffzusammensetzung und daraus hergestellte Produkte vorausschauend verbraucherfreundlich gestaltet. Dies könnte insbesondere bei Produkten von Bedeutung sein, die in den Kostüm- und Bühnenbildner-, Bastel- oder Täschnerbereich fallen. In diesen Anwendungsbereichen könnte die Körperoberfläche des Verbrauchers direkt in Berührung mit den Versteifungsmaterialien oder den diese enthaltenden Produkten kommen. Im Gegensatz dazu ist in dem gemäß dem Stand der Technik verwendeten Polycarbonat als Mittel zur Erhöhung der Biegesteifigkeit Bisphenol-A enthalten.

Das besonders bevorzugte PET-Harz BISNEINEX ™ weist darüber hinaus weitere vorteilhafte physikalische, mechanischen Eigenschaften auf, die erlauben, es als Austauschstoff für die aus dem Stand der Technik bekannten, die Biegesteifigkeit erhöhenden Mittel einzusetzen. BISNEINEX ™ neigt nicht zum Auskristallisieren und lässt sich gut verarbeiten. Aufgrund des Rekristallisationsverhaltens entsteht ein großes Verarbeitungsfenster. Durch die Temperaturbeständigkeit zieht sich das hergestellte Versteifungsmaterial nicht zusammen. Das Lastverhalten ist verbessert. Zudem weist es eine hohe Spannungsrissbeständigkeit auf.

Es wird hervorgehoben, dass sich bisherige Einsatzgebiete des in Rede stehenden PET-Harzes BISNEINEX ™ auf großvolumige Getränkeflaschen oder Aerosolbehälter beschränken.

Als thermoplastische Polyurethane verstehen sich solche, die einen Schmelzbereich von 60 °C bis 100 °C aufweisen. Ethylenvinylacetat (EVA) weist in der Regel einen Schmelzbereich von 60 °C bis 100 °C auf. Ein thermoplastischer Kleber, nämlich Polycaprolacton, weist in der Regel einen Schmelzbereich von 58 °C bis 70 °C auf.

Bezüglich der Versteifungsmaterialien und der verschiedenen Produkte unter Verwendung der Versteifungsmaterialien wirken die im Hinblick auf die Kunststoffzusammensetzung und die Verwendung des PET-Harzes BISNEINEX ™ geschilderten Vorteile, insbesondere die kostengünstige Herstellung aber auch die hohe Biegesteifigkeit und Festigkeit sowie weitgehende Schadstofffreiheit, dort fort.

Bezüglich des thermoplastischen Klebers als Heißschmelzklebermittel in der Kunststoffzusammensetzung könnte eine Mischung zum Einsatz kommen, die ausgewählt ist aus Polyestern und / oder Polycaprolacton. Dabei werden Polyester eingesetzt, die nicht identisch sind mit dem erfindungsgemäß als Zuschlagstoff verwendeten PET-Harz (BISNEINEX ™). Bevorzugt könnte Polycaprolacton als thermoplastischer Kleber bzw. als Heißschmelzklebermittel zum Einsatz kommen, da dessen vergleichsweise geringer Schmelzpunkt von ca. 60 °C besonders geeignet ist. Je nach Anforderungen könnten aber auch Polyester, die verschieden von dem PET-Harz sind, allein oder in Mischung mit Polycaprolacton als thermoplastischer Kleber bzw. als Heißschmelzklebermittel eingesetzt werden. Eine Verwendung von PET als Polyester und als Heißschmelzklebermittel kommt nicht in Betracht. In der vorliegenden Erfindung kommt es auf die die Biegesteifigkeit erhöhenden Eigenschaften des speziellen PET-Harzes, insbesondere BISNEINEX ™, als Zuschlagstoff an.

Es wurde gefunden, dass eine nicht erfindungsgemäße Kunststoffzusammensetzung besonders wirksam ist, wenn
- 15 Gew.-% bis 95 Gew.-% Heißschmelzklebemittel zu
- 85 Gew.-% bis 5 Gew.-% BISNEINEX ™ enthalten sind.

Weiter stellten sich folgende Intervalle der Grundkomponenten einer nicht erfindungsgemäßen Kunststoffzusammensetzung als vorteilhaft heraus:
- 30 Gew.-% bis 95 Gew.-% Heißschmelzklebemittel zu
- 70 Gew.-% bis 5 Gew.-% BISNEINEX ™.

Folgende Intervalle der Grundkomponenten einer nicht erfindungsgemäßen Kunststoffzusammensetzung wurden besonders bevorzugt:
- 65 Gew.-% bis 30 Gew.-% Heißschmelzklebemittel zu
- 35 Gew.-% bis 70 Gew.-% BISNEINEX ™.

Eine weitere Alternative stellen folgende Intervalle der Grundkomponenten einer nicht erfindungsgemäßen Kunststoffzusammensetzung dar:
- 45 Gew.-% bis 40 Gew.-% Heißschmelzklebemittel zu
- 55 Gew.% bis 60 Gew.-% BISNEINEX™.

Versuche haben ergeben, dass die Kunststoffmischung vorzugsweise aus vier bis fünf Komponenten bestehen könnte. Beispielsweise haben sich gut verarbeitbare Kunststoffmischungen mit Komponenten folgender Intervalle herausgestellt:
Nicht erfindungsgemäße Kunststoffzusammensetzung aus zwei Komponenten:
- 65 Gew.-% bis 30 Gew.-% Polycaprolacton, zu
- 35 Gew.-% bis 70 Gew.-% BISNEINEX ™
   oder
- 65 Gew.-% bis 30 Gew.-% Ethylenvinylacetat (EVA)
- 35 Gew.-% bis 70 Gew.-% BISNEINEX ™.

Diese Zusammensetzungen werden vorzugsweise in Granulatform verwendet und im Extrudierverfahren eingesetzt.

Nicht erfindungsgemäße Kunststoffzusammensetzung aus drei Komponenten:
- 10 Gew.-% bis 45 Gew.-% Polycaprolacton, zu
- 5 Gew.-% bis 30 Gew.-% Ethylenvinylacetat (EVA) zu
- 85 Gew.-% bis 25 Gew.-% BISNEINEX ™.

Diese Zusammensetzung wird vorzugsweise in Granulatform verwendet und im Extrudierverfahren eingesetzt. Bei bestimmten Produkten kann die Komponente BISNEINEX ™ auch als Pulver vorliegen und in dieser Form die gewünschten Füllstoff- bzw. Zuschlagstoffeigenschaften im Hinblick auf die Erhöhung der Biegesteifigkeit erzeugen.

Nicht erfindungsgemäße Kunststoffzusammensetzung aus drei Komponenten:
- 40 Gew.-% bis 50 Gew.-% Polycaprolacton, zu
- 1 Gew.-% bis 10 Gew.-% thermoplastisches Polyurethan (TPU) zu
- 59 Gew.-% bis 40 Gew.-% BISNEINEX ™.

Diese Zusammensetzung kann sowohl in Pulverform verwendet und im Sinterverfahren verarbeitet werden als auch in Granulatform verwendet und im Extrudierverfahren eingesetzt werden.

Erfindungsgemäße Kunststoffzusammensetzung aus vier Komponenten:
- 7,5 Gew.-% bis 25 Gew.-% thermoplastischer Kleber sowie
- 7,5 Gew.-% bis 20 Gew.-% Ethylenvinylacetat (EVA) und
- 15 Gew.-% bis 50 Gew.-% thermoplastisches Polyurethan (TPU)
- 70 Gew.-% bis 5 Gew.-% BISNEINEX ™.

Diese Zusammensetzung wird vorzugsweise in Granulatform verwendet und im Extrudierverfahren eingesetzt.

Die erfindungsgemäße Kunststoffzusammensetzung könnte als zusätzliche Komponente 1 Gew.-% bis 3 Gew.-% Farbstoffe enthalten. Alternativ oder kumulativ hierzu ist die Zugabe weiterer Hilfsstoffe möglich.

Alle Kunststoffzusammensetzungen sind so auszugestalten, dass sich alle Komponenten auf 100 Gew.-% ergänzen.

Mit dieser Kunststoffzusammensetzung können - im Gegensatz zu Kunststoffzusammensetzungen gemäß dem Stand der Technik - verschiedene Verarbeitungsverfahren zur Herstellung der Versteifungsmaterialien durchgeführt werden. Es kommt nur noch auf die Realisierung der Darreichungsform als Pulver oder Granulat an. Die Komponenten könnten als Granulat eingekauft und gelagert werden. Hieraus könnten im Bedarfsfall, insbesondere für Sinterprodukte, Pulver erstellt werden.

Gemäß einem Ausführungsbeispiel könnte die erfindungsgemäße Kunststoffzusammensetzung als Granulat vorliegen und im Extrusionsverfahren zu Versteifungsmaterial in Form von thermoplastischer Platten- oder Rollenware verarbeitbar sein. Dabei könnten Einschnecken-Extruder oder Doppelschnecken-Extruder eingesetzt sein. Auch das Co-Extrusionsverfahren, wobei beispielswese direkt eine Kleberschicht auf das Produkt aufgebracht werden könnte, käme in Betracht. Alternativ zur reinen Granulatform der erfindungsgemäßen Kunststoffzusammensetzung könnte diese auch als Mischung aus Granulat und Pulver vorliegen. Dabei könnte die Komponente BISNEINEX™ den Pulveranteil der Mischung ausmachen. Hintergrund dieser Einsatzform von BISNEINEX™ sind bestimmte zu erzielende Produkteigenschaften, die über die Pulverform erreichbar sind.

Gemäß einem weiteren Ausführungsbeispiel könnte die erfindungsgemäße Kunststoffzusammensetzung als Pulver vorliegen und im Sinterverfahren zu Versteifungsmaterial verarbeitbar sein. Die erfindungsgemäße Kunststoffzusammensetzung könnte auch in Druckverfahren gemäß EP 0222220 B1 oder WO 2012 059367 A1 zum Einsatz kommen.

Die erfindungsgemäßen Versteifungsmaterialien, insbesondere im Schuh,- Orthopädie,- Bastel- Kostüm- oder Bühnenbildner- oder Täschnerbereich, enthalten die voranstehend beschriebene Kunststoffzusammensetzung.

Die Versteifungsmaterialien könnten als Platten- oder Rollenware vorliegen, die ein- oder beidseitig mit Trägermaterial oder Klebefilm kaschiert ist. Bei dem Trägermaterial könnte es sich bspw. um textile Gewebe, Vliese, Mikrofasern oder Gewirke handeln. Die Versteifungsmaterialien können des weiteren nachbearbeitet sein, nämlich in Form von aus der Platten- oder Rollenware gefertigten, bspw. ausgestanzten und / oder geformten, Zwischenprodukten vor dem Einbau in einen Schuh vorliegen. Insbesondere könnten die erfindungsgemäßen Versteifungsmaterialien als Schuhvorderkappen oder Schuhhinterkappen oder Schuhseitenversteifungen vorliegen oder in Form weiterer Materialien für die Schuhindustrie.

Die erfindungsgemäßen Produkte, Schuhe, orthopädische Artikel, das Bastelmaterial oder die Taschen, enthalten erfindungsgemäß die unter Verwendung der erfindungsgemäßen Kunststoffzusammensetzung hergestellten erfindungsgemäßen vorbeschriebenen Versteifungsmaterialien. Im Hinblick auf die orthopädischen Artikel könnte es sich um Einlagen handeln. Im Hinblick auf das Bastelmaterial könnte eine Kunststoffzusammensetzung verwendet werden, das eine hohe Biegesteifigkeit aufweist und einen Erweichungsbereich in einem Temperaturintervall von 80 °C bis 120 °C.

Es gibt nun verschiedene Möglichkeiten, die Lehre der vorliegenden Erfindung in vorteilhafter Weise auszugestalten und weiterzubilden. Die Erfindung wird im folgenden anhand von Beispielen näher erläutert.

### Verwendete Untersuchungsmaterialien:

Es wurden jeweils drei verschiedene plattenförmige Versteifungsmaterialienverwendet und miteinander verglichen.

Als Heißschmelzklebermittel wurden verwendet:
Polycaprolacton eines Typs mit einem Molekulargewicht von 40.000 g/mol bis 80.000 g/mol und mit einer Schmelzviskosität bzw. MFI (Melting Flow Index) bei 150°C / 2,16 kg = 2 g / 10 min bis 80 g / 10 min aber überwiegend mit einem MFI bei 150°C = ca. 20 g/ 10 min und mit einem Schmelzbereich von 58 °C bis 70 ° C. Ethylenvinylacetat (EVA) eines Typs mit einer Schmelzviskosität bzw. MFI (Melting Flow Index) bei 190°C = 10 bis 100 g / 10 min und einem; Vinylacetat-Gehalt (VA) = 18 bis 33 % sowie einem Schmelzbereich zwischen 60 °C bis 100 °C

Thermoplastisches Polyurethan (TPU) eines Typs mit einer Schmelzviskosität bzw. MFI (Melting Flow Index) bei 190°C = 15 g / 10 min bis 90 g / 10 min und einem Schmelzbereich zwischen 60 °C bis 100 °C.

### Charge A:

Das plattenförmige Versteifungsmaterial weist eine Dicke von 0,9 mm auf. Die Breiten- und Längenabmessung des plattenförmigen Versteifungsmaterials betragen 30 mm und 100 mm.

### Charge B

Das plattenförmige Versteifungsmaterial weist eine Dicke von 1,0 mm auf. Die Breiten- und Längenabmessung des plattenförmigen Versteifungsmaterials betragen 30 mm und 100 mm.

### Beispiele:

Die jeweils drei verschiedenen Proben **(1)** bis **(6)** der Versteifungsmaterialien enthielten für beide Chargen A + B folgende Kunststoffzusammensetzungen:

| | |
|---|---|
| **(1)** | **Charge A Versteifungsmaterialprobe** - **Extrusionsmaterial mit erfindungsgemäßer Zusammensetzung** |
| **(4)** | **Charge B Versteifungsmaterialprobe - Extrusionsmaterial mit erfindungsgemäßer Zusammensetzung** |

| | | |
|---|---|---|
| | 10 Gew.-% | Polycaprolacton mit einem Schmelzpunkt von 58°C bis 70°C |
| | 10 Gew.-% | Ethylenvinylacetat (EVA) mit einem Vinylacetat-Gehalt von 18% bis 45% |
| | 15 Gew.-% | TPU mit einem Schmelzpunkt von 50°C bis 140°C |
| | 65 Gew.-% | BISNEINEX™ |
| Summe: | 100 Gew.-% | Kunststoffzusammensetzung |

| | |
|---|---|
| **(2)** | **Charge A Versteifungsmaterialprobe** - **Sintermaterial mit Polycarbonat anstatt BISNEINEX™** |
| **(5)** | **Charge B Versteifungsmaterialprobe - Sintermaterial mit Polycarbonat anstatt BISNEINEX™** |

Die Proben **(2)** und **(5)** weisen dieselbe Zusammensetzung auf wie die Proben **(1)** und **(4)** mit dem Unterschied, dass BISNEINEX ™ durch Polycarbonat ersetzt ist.

| | |
|---|---|
| **(3)** | **Charge A Versteifungsmaterialprobe** - **Extrusionsmaterial mit Holzmehl anstatt BISNEINEX™** |
| **(6)** | **Charge B Versteifungsmaterialprobe - Extrusionsmaterial mit Holzmehl anstatt BISNEINEX™** |

Die Proben **(3)** und **(6)** weisen dieselbe Zusammensetzung auf wie die Proben **(1)** und **(4)** mit dem Unterschied, dass BISNEINEX ™ durch Holzmehl ersetzt ist.

### Verwendete Untersuchungsmethoden:

### Prüfverfahren für Hinterkappen und Vorderkappen - sog. DOM-Test / Belastungstest nach EN ISO 20864

Der DOM-Test wurde ausschließlich trocken durchgeführt, da die Versteifungsmaterialien in Ihrer Anwendung regelmäßig nicht der Feuchtigkeit oder Nässe ausgesetzt sind.

### Biegesteifigkeitsbestimmung nach DIN 53121

Es wurde das Zweipunkt-Verfahren mit starrer Einspannung angewendet. Als Messergebnis ist jeweils die angewandte Kraft dargestellt, die aufgebracht werden muss, um die Proben in einem Winkel von 45° zu biegen. Je höher der Betrag der Kraft ist, umso höher ist auch die Steifigkeit und Biegesteifigkeit des entsprechenden Materials. Die Kraft wurde über die Länge und die Breite der Proben in Maschinenlaufrichtung auf die Proben aufgebracht. Maschinenlaufrichtung bedeutet beim Extrusionsmaterial gemäß den Beispielen **(1), (3), (4), (6)** die Auspressrichtung des Extrudats oder die Richtung eines Transportbandes, auf das das Extrudat gelangt. Maschinenlaufrichtung bedeutet beim Sintermaterial gemäß den Beispielen **(2), (5)** die Richtung des Transportbandes, auf das das Pulver aufgebracht wird, bevor die Temperaturbehandlung / das Sintern einsetzt. Die Biegesteifigkeit wurde nach DIN 53121 als spezifische Biegesteifigkeit S gemäß der Formel (3) berechnet.

### Herstellung der Versteifungsmaterial-Proben gemäß den Beispielen (1) bis (6) der Chargen A + B

Die Kunststoffzusammensetzungen gemäß den Beispielen **(1), (3),** enthaltend BISNEINEX ™, und gemäß den Beispielen **(4), (6),** enthaltend Holzmehl, wurden extrudiert.

Die Kunststoffzusammensetzungen gemäß den Beispielen **(2)** und **(5),** enthaltend Polycarbonat, wurden gesintert.

### Zusammenfassung der Untersuchungsergebnisse in zwei Tabellen - getrennt für die Chargen A und B

### Charge A (0,9 mm Dicke)

| | **Beispiel (1)** | **Beispiel (2)** | **Beispiel (3)** |
|---|---|---|---|
| | **Mit BISNEINEX™** | **Mit Polycarbonat (PC)** | **Mit Holzmehl** |
| **DOM-Test EN ISO 20864** | | | |
| Gewicht [g/cm²] - weight | 1018 | 837 | 984 |
| Dicke [mm] - thickness | 0,9 | 0,9 | 0,9 |
| Anfangseindrücklastwert [N] - initial dry collapsing load | 188 | 50 | 77 |
| Eindrücklastwert nach dem zehnten Eindrücken [N] - 10 dry collapsing load | 140 | 41 | 57 |
| Rückprall [%] - dry resilience | 85 | 82 | 74 |
| Anfangs-Flächenformverhalten [%] - dry area shape retention | 95 | 96 | 89 |
| Flächenformverhalten nach der zehnten Eindrücklast [%] - dry area shape retention 10th collaps | 94 | 94 | 69 |

| **Biegesteifigkeit DIN 53121** | | | |
|---|---|---|---|
| Messung der Kraft über die Länge in Maschinenlaufrichtung [mN] | 1775 | 975 | 1652 |
| Messung der Kraft über die Breite quer zur Maschinenlaufrichtung [mN] | 1125 | 575 | 875 |
| Berechnete spezifische | 251,2 (Länge) | 137,9 (Länge) | 233,8 (Länge) |
| Biegesteifigkeit S [mN/m] | 159,2 (Breite) | 81,4 (Breite) | 123,8 (Breite) |

### Charge B (1,0 mm Dicke)

| | **Beispiel (4)** | **Beispiel (5)** | **Beispiel (6)** |
|---|---|---|---|
| | **Mit BISNENEX ™** | **Mit Polycarbonat (PC)** | **Mit Holzmehl** |
| **DOM-Test EN ISO 20864** | | | |
| Gewicht [g/m²] - weight | 1120 | 986 | 1112 |
| Dicke [mm] - thickness | 1,0 | 1,0 | 1,0 |
| Anfangseindrücklastwert [N] - initial dry collapsing load | 126 | 86 | 87 |
| Eindrücklastwert nach | 83 | 66 | 61 |
| dem zehnten Eindrücken [N] - 10 dry collapsing load | | | |
| Rückprall [%] - dry resilience | 80 | 77 | 70 |
| Anfangs-Flächenformverhalten [%] - dry area shape retention | 91 | 93 | 90 |
| Flächenformverhalten nach der zehnten Eindrücklast [%] - dry area shape retention 10th collaps | 90 | 90 | 75 |

| **Biegesteifigkeit DIN 53121** | | | |
|---|---|---|---|
| Messung der Kraft über die Länge in Maschinenlaufrichtung [mN] | 2025 | 1425 | 1925 |
| Messung der Kraft über die Breite quer zur Maschinenlaufrichtung [mN] | 1075 | 775 | 925 |
| Berechnete spezifische | 286,5 (Länge) | 201,6 (Länge) | 272,4 (Länge) |
| Biegesteifigkeit S [mN/m] | 152,1 (Breite) | 109,6 (Breite) | 130,9 (Breite) |

Bezüglich beider **Chargen A und B** ist zu erkennen, dass die Versteifungsmaterialproben **(1)** und **(4),** die die erfindungsgemäße Kunststoffmischung mit BISNEINEX ™ enthalten, das höchste Gewicht und die höchsten Biegesteifigkeitswerte sowohl im Hinblick auf die Länge als auch im Hinblick auf die Breite aufweisen. Außerdem zeigen beide **Chargen A und B,** dass die Versteifungsmaterialproben **(1)** und **(4),** die die erfindungsgemäße Kunststoffmischung mit BISNEINEX ™ enthalten, die höchsten Werte im Hinblick auf
- den Anfangseindrücklastwert [N] - initial dry collapsing load
- den Eindrücklastwert nach dem zehnten Eindrücken [N] - 10 dry collapsing load
- den Rückprall [%] - dry resilience
aufweisen und dass die Werte im Hinblick auf
- das Anfangs-Flächenformverhalten [%] - dry area shape retention
- das Flächenformverhalten nach der zehnten Eindrücklast [%] - dry area shape retention 10th collaps
im Wesentlichen genauso gut sind wie bei den Kunststoffmischungen der Beispiele **(2)** und **(5)** die Polycarbonat (PC) aufweisen und besser sind gegenüber den Beispielen **(3)** und **(6),** die Holzmehl enthalten. Gerade die Eindrücklastwerte zeigen die für die Produkte günstige Auswirkung des die Biegesteifigkeit erhöhenden Mittels, bzw. Füll- oder Zuschlagstoffes, nämlich des PET-Harzes BISNEINEX ™.

Die Verwendung von BISNEINEX ™ hat sich als ursächlich für die guten Härteund Biegesteifigkeitseigenschaften der die erfindungsgemäße Kunststoffzusammensetzung enthaltenden erfindungsgemäßen Versteifungsmaterialien erwiesen. Durch die erfindungsgemäße Kunststoffmischung kann die Verwendung von teurem Polycarbonat als die Biegesteifigkeit erhöhendes Mittel bei teils gleichen, teils verbesserten Eigenschaften vollständig eliminiert werden. Der Ersatz von Polycarbonat ist auch unter dem Aspekt der Schadstofffreiheit der erfindungsgemäßen Versteifungsmaterialien betreffend Bisphenol-A von Vorteil. Hierdurch kann möglichen Anforderungen von Behörden und Verbrauchern kostengünstig entsprochen werden. Dies könnte nicht nur im Lebensmittelbereich von Relevanz sein, sondern auch alle Materialien betreffen, die direkt oder indirekt mit der Haut eines Nutzers in Berührung kommen und auch den Produktionsprozess als solchen, innerhalb dessen es auch zum Kontakt des Personal mit dem Schadstoff kommen kann.

Außerdem betrifft die Erfindung neben der Kunststoffzusammensetzung und neben der Verwendung die Versteifungsmaterialien selbst, die in verschiedenen Produkten enthalten sein können. Konkret geht es um Produkte, wie Schuhe, orthopädische Artikel, insbesondere Schuheinlagen, Bastelmaterial, Dekorationsund Kostüm- sowie Bühnenbildnermaterial, Material für Theaterrequisiten und ähnliches sowie Taschen. Bei Schuhen als Produkte können die erfindungsgemäßen Versteifungsmaterialien bspw. in Vorder- oder Hinterkappen enthalten sein.

Es wird darauf hingewiesen, dass die Darstellung der Beispiele (1) bis (6) nur beispielhaften Charakter hat und die Erfindung selbst nicht einschränkt. Dies betrifft insbesondere die Zusammensetzung der der einzelnen Komponenten, als auch die Herstellung der Proben oder jedes anderen Versteifungsmaterials.

## Patentansprüche

1. Kunststoffzusammensetzung zur Herstellung von Versteifungsmaterialien mit einem Heißschmelzklebermittel und einem die Biegesteifigkeit erhöhenden Mittel, wobei das Heißschmelzklebermittel ausgewählt ist aus der Gruppe, umfassend thermoplastische Polyurethane (TPU), Ethylenvinylacetat (EVA) und thermoplastischen Kleber, sowie Mischungen davon und wobei das die Biegesteifigkeit erhöhende Mittel ein Polyethylenterephthalatharz (PET-Harz) ist, **dadurch gekennzeichnet,**
**dass** in der Kunststoffzusammensetzung
15 Gew.-% bis 50 Gew.-% thermoplastisches Polyurethan (TPU) 7,5 Gew.-% bis 20 Gew.-% Ethylenvinylacetat (EVA) und
7,5 Gew.-% bis 25 Gew.-% thermoplastischer Kleber sowie
70 Gew.-% bis 5 Gew.-% PET-Harz
enthalten sind.

2. Kunststoffzusammensetzung nach Anspruch 1, **dadurch gekennzeichnet, dass** das Polyethylenterephthalatharz (PET-Harz) eine Schmelztemperatur aufweist, die deutlich über der des Heißschmelzklebermittels liegt und insbesondere ca. 260 °C beträgt.

3. Kunststoffzusammensetzung nach Anspruch 1 oder 2, **dadurch gekennzeichnet, dass** das Polyethylenterephthalatharz (PET-Harz) eine intrinsische Viskosität von 1,04 ± 0,03 dl/g aufweist.

4. Kunststoffzusammensetzung nach einem der Ansprüche 1 bis 3, **dadurch gekennzeichnet, dass** das Polyethylenterephthalatharz (PET-Harz) ein Bisphenol-A-freies Polyethylenterephthalatharz (PET-Harz) ist.

5. Kunststoffzusammensetzung nach einem der Ansprüche 1 bis 4, **dadurch gekennzeichnet, dass** als Heißschmelzklebemittel der Kunststoffzusammensetzung ein thermoplastischer Kleber ausgewählt ist aus Polyestern, die von Polyethylenterephthalatharz (PET-Harz) verschieden sind, und/oder Polycaprolacton.

6. Kunststoffzusammensetzung nach einem der Ansprüche 1 bis 5 **dadurch gekennzeichnet, dass** in der Kunststoffzusammensetzung vier oder fünf verschiedene Komponenten enthalten sind.

7. Kunststoffzusammensetzung nach einem der Ansprüche 1 bis 6, **dadurch gekennzeichnet, dass** in der Kunststoffzusammensetzung 1 Gew.-% bis 3 Gew.-% Farbstoff enthalten ist.

8. Kunststoffzusammensetzung nach einem der Ansprüche 1 bis 7, **dadurch gekennzeichnet, dass** die Kunststoffzusammensetzung als Granulat vorliegt und im Extrusionsverfahren zu Versteifungsmaterial in Form von thermoplastischer Platten- oder Rollenware verarbeitbar ist.

9. Kunststoffzusammensetzung nach einem der Ansprüche 1 bis 7, **dadurch gekennzeichnet, dass** die Kunststoffzusammensetzung als Pulver vorliegt und im Sinterverfahren zu Versteifungsmaterial verarbeitbar ist.

10. Verwendung von Polyethylenterephthalatharz (PET-Harz) zur Herstellung von Versteifungsmaterialien im Schuh,- Orthopädie,- Bastel- oder Täschnerbereich innerhalb einer Kunststoffmischung nach einem der Ansprüche 1 bis 9.

11. Versteifungsmaterialien, insbesondere im Schuh,- Orthopädie,- Bastel- oder Täschnerbereich, enthaltend eine Kunststoffzusammensetzung nach einem der Ansprüche 1 bis 9.

12. Versteifungsmaterialien nach Anspruch 11, **dadurch gekennzeichnet, dass** die Versteifungsmaterialien als Platten- oder Rollenware vorliegen, die ein- oder beidseitig mit Trägermaterial oder Klebefilm kaschiert ist.

13. Versteifungsmaterialien nach Anspruch 11 oder 12, **dadurch gekennzeichnet, dass** die Versteifungsmaterialien in Schuhen, orthopädischen Artikeln, insbesondere Schuheinlagen, Bastelmaterial, Dekorationsmaterial, Kostümbildnermaterial, Taschen, Täschnereiwaren enthalten sein.

## Claims

1. A plastic composition for producing reinforcement materials, having a hot-melt adhesive agent and an agent increasing the bending stiffness, the hot-melt adhesive agent being selected from the group comprising thermoplastic polyurethanes (TPU), ethylene vinyl acetate (EVA) and thermoplastic adhesives and mixtures thereof, and the agent increasing the bending stiffness being a polyethylene terephthalate resin (PET resin), **characterised in that**
the plastic composition contains
• 15 wt% to 50 wt% thermoplastic polyurethane (TPU),
• 7.5 wt% to 20 wt% ethylene vinyl acetate (EVA), and
• 7.5 wt% to 25 wt% thermoplastic adhesive, and
• 70 wt% to 5 wt% PET resin.

2. The plastic composition according to Claim 1, **characterised in that** the polyethylene terephthalate resin (PET resin) has a melting temperature which is considerably higher than that of the hot-melt adhesive agent and is in particular approximately 260°C.

3. The plastic composition according to Claim 1 or 2, **characterised in that** the polyethylene terephthalate resin (PET resin) has an intrinsic viscosity of 1.04 ± 0.03 dl/g.

4. The plastic composition according to any one of Claims 1 to 3, **characterised in that** the polyethylene terephthalate resin (PET resin) is a bisphenol-A-free polyethylene terephthalate resin (PET resin).

5. The plastic composition according to any one of Claims 1 to 4, **characterised in that** as the hot-melt adhesive agent of the plastic composition, a thermoplastic adhesive is selected from polyesters differing from polyethylene terephthalate resin (PET resin), and/or polycaprolactone.

6. The plastic composition according to any one of Claims 1 to 5, **characterised in that** the plastic composition contains four or five different components.

7. The plastic composition according to any one of Claims 1 to 6, **characterised in that** the plastic composition contains 1 wt% to 3 wt% dye.

8. The plastic composition according to any one of Claims 1 to 7, **characterised in that** the plastic composition is in granule form and can be processed using extrusion methods to form reinforcement material in the form of thermoplastic boards or rolls.

9. The plastic composition according to any one of Claims 1 to 7, **characterised in that** the plastic composition is in powder form and can be processed using sintering methods to form reinforcement material.

10. The use of polyethylene terephthalate resin (PET resin) for producing reinforcement materials in the field of shoes, orthopaedics, crafts or bag-making, in a plastic mixture according to any one of Claims 1 to 9.

11. Reinforcement materials, in particular in the field of shoes, orthopaedics, crafts or bag-making, containing a plastic composition according to any one of Claims 1 to 9.

12. The reinforcement materials according to Claim 11, **characterised in that** the reinforcement materials are in the form of boards or rolls which are lined on one or both sides with backing material or adhesive film.

13. The reinforcement materials according to Claim 11 or 12, **characterised in that** the reinforcement materials are contained in shoes, orthopaedic articles, in particular shoe inserts, craft material, decorative material, costume design material, bags and bag-making goods.

## Revendications

1. Composition de matière plastique, destinée à la fabrication de matières de renfort, comprenant un agent adhésif thermofusible et un agent augmentant la résistance à la flexion, l'agent adhésif thermofusible étant sélectionné dans le groupe comprenant les polyuréthanes thermofusibles (TPU), l'éthylène-acétate de vinyle (EVA) et les agents adhésifs thermoplastiques, ainsi que leurs mélanges et l'agent augmentant la résistance à la flexion étant une résine de polyéthylène-téréphtalate (résine de PET) **caractérisée,**
**en ce que** dans la composition de matière plastique sont contenus
• de 15 % en poids à 50 % en poids de polyuréthane thermoplastique (TPU)
• de 7,5 % en poids à 20 % en poids d'éthylèneacétate de vinyle (EVA) et
• de 7,5 % en poids à 25 % en poids d'un agent adhésif thermoplastique, ainsi que
• de 70 % en poids à 5 % en poids de résine PET.

2. Composition de matière plastique selon la revendication 1, **caractérisée en ce que** la résine de polyéthylène-téréphtalate (PET-Harz) présente une température de fusion qui est nettement supérieure à celle de l'agent adhésif thermofusible et qui s'élève notamment à environ 260 °C.

3. Composition de matière plastique selon la revendication 1 ou 2, **caractérisée en ce que** la résine de polyéthylène-téréphtalate (résine PET) présente une viscosité intrinsèque de 1,04 ± 0,03 dl/g.

4. Composition de matière plastique selon l'une quelconque des revendications 1 à 3, **caractérisée en ce que** la résine de polyéthylène-téréphtalate (résine PET) est une résine de polyéthylène-téréphtalate (résine PET) exempte de bisphénol A.

5. Composition de matière plastique selon l'une quelconque des revendications 1 à 4, **caractérisée en ce que** l'agent adhésif thermofusible de la composition de matière plastique est un agent adhésif thermoplastique sélectionné par les polyesters qui sont différents de la résine de polyéthylène-téréphtalate (résine PET), et/ou la polycaprolactone.

6. Composition de matière plastique selon l'une quelconque des revendications 1 à 5 **caractérisée en ce que** dans la composition de matière plastique sont contenus quatre ou cinq différents composants.

7. Composition de matière plastique selon l'une quelconque des revendications 1 à 6, **caractérisée en ce que** dans la composition de matière plastique sont contenus de 1 % en poids à 3 % en poids de colorant.

8. Composition de matière plastique selon l'une quelconque des revendications 1 à 7, **caractérisée en ce que** la composition de matière plastique se présente sous la forme de granulés et est susceptible d'être mise en œuvre par un procédé d'extrusion pour obtenir une matière de renfort sous la forme de panneaux ou de matière en rouleaux thermoplastiques.

9. Composition de matière plastique selon l'une quelconque des revendications 1 à 7, **caractérisée en ce que** la composition de matière plastique se présente sous la forme d'une poudre et est susceptible d'être mise en œuvre par un procédé de frittage pour obtenir une matière de renfort.

10. Utilisation d'une résine de polyéthylène-téréphtalate (résine PET) pour la fabrication de matières de renfort dans le secteur de la chaussure, de l'orthopédie, du bricolage ou de la maroquinerie à l'intérieur d'un mélange de matières plastiques selon l'une quelconque des revendications 1 à 9.

11. Matières de renfort, notamment dans le secteur de la chaussure, de l'orthopédie, du bricolage ou de la maroquinerie, contenant une composition de matière plastique selon l'une quelconque des revendications 1 à 9.

12. Matières de renfort selon la revendication 11, **caractérisée en ce que** les matières de renfort se présentent sous la forme de panneaux ou de matière en rouleaux thermoplastiques, qui sont contrecollés sur une face ou sur les deux faces avec une matière de support ou un film adhésif.

13. Matières de renfort selon la revendication 11 ou 12, **caractérisée en ce que** les matières de renfort sont contenues dans des chaussures, des articles orthopédiques, notamment des semelles intérieures de chaussures, du matériel de bricolage, du matériel de décoration, du matériel de costumier, des sacs, des produits de maroquinerie.
